# EUROPÄISCHE PATENTSCHRIFT

(11) **EP 2 527 936 B1**
(45) Veröffentlichungstag und Bekanntmachung des Hinweises auf die Patenterteilung: **18.05.2016**
(21) Anmeldenummer: 11167653.2
(22) Anmeldetag: 26.05.2011
(51) Int. Cl.: G05B 19/042, G05B 19/418, G06F 9/455

(54) **Verfahren zum Zugriff auf ein Automatisierungssystem sowie nach dem Verfahren arbeitendes System**
Method for accessing an automation system and system operating according to the method
Procédé d'accès à un système d'automatisation et système fonctionnant selon ce procédé

(43) Veröffentlichungstag der Anmeldung: 28.11.2012
(73) Patentinhaber: Siemens Aktiengesellschaft, 80333 München (DE)
(72) Erfinder: Wolf, Edgar, 71083 Herrenberg (DE)

(56) Entgegenhaltungen:
- EP-A1- 2 293 164
- EP-A2- 1 296 232
- EP-A2- 1 906 274
- WO-A1-2007/105979
- US-A1- 2010 027 552
- US-A1- 2010 256 795
- US-A1- 2011 093 847
- US-B1- 6 788 980

## Beschreibung

Die Erfindung betrifft ein Verfahren und ein korrespondierendes System zum Zugriff auf ein Automatisierungssystem, etwa für Wartungs-, Diagnose- und Inbetriebnahmezwecke, etc. mit einem Programmiergerät oder dergleichen.

Derartige Verfahren zum Zugriff auf ein Automatisierungssystem sind an sich bekannt. Der Zugriff bezieht sich auf die im Automatisierungssystem durch ein oder mehrere Automatisierungsgeräte ausgeführte Steuerungssoftware sowie Parametrierungs- und Konfigurationsdaten der von dem Automatisierungssystem umfassten Automatisierungsgeräte. Die Gesamtheit der Steuerungssoftware eines Automatisierungssystems sowie der jeweiligen Parametrierungs- und Konfigurationsdaten wird hier und im Folgenden kurz als Automatisierungslösung bezeichnet, nachdem diese die Funktionalität des jeweiligen Automatisierungssystems und damit die Art und Weise festlegt, wie dieses einen technischen Prozess steuert und/oder überwacht.

Der einfachste Fall eines solchen Zugriffs besteht darin, dass Servicepersonal mit einem Programmiergerät zum Ort des Automatisierungssystems anreist, das Programmiergerät an ein Automatisierungsgerät des Automatisierungssystems, zum Beispiel eine speicherprogrammierbare Steuerung oder bei einem umfangreicheren Automatisierungssystem an ein derartiges Automatisierungsgerät oder ein als Leitstation fungierendes Automatisierungsgerät, anschließt und sich so mit dem Automatisierungssystem verbindet. Auf dem Programmiergerät wird sodann eine Engineeringsoftware gestartet mit der sich ein Zugriff auf die jeweilige Automatisierungslösung ergibt. Unter Verwendung der Engineeringsoftware können daraufhin z.B. die notwendigen Wartungs- oder Inbetriebnahmetätigkeiten durchführt werden.

Allerdings müssen Serviceorganisationen, die derartige Dienstleistungen in Bezug auf Automatisierungssysteme anbieten, ihre Dienstleistungen weltweit anbieten. Dabei geht es inhaltlich darum, geographisch an einer Vielzahl von Orten befindliche Maschinen und Anlagen (Automatisierungssystem), für die evtl. Serviceverträge abgeschlossen sind, mit Hilfe von Engineeringsoftware in Betrieb zu setzten, Fehler zu beheben und Änderungen und Erweiterungen durchzuführen. Dies wird erschwert durch eine große Abhängigkeit zwischen der Version der im Vorfeld und/oder während einer Inbetriebnahme benutzten Engineeringsoftware und während einer Inbetriebnahme entstandener Projektierungsdaten. So können nicht ohne weiteres ein für ein Projekt entstandener Satz von Projektierungsdaten mit beliebigen Versionen einer Engineeringsoftware gelesen oder gar geändert werden.

In Konsequenz daraus muss das Servicepersonal eine zum jeweiligen Projektierungsdatensatz des Automatisierungssystems passende Version der Engineeringsoftware mitbringen. Ansonsten kann evtl. aufgrund von Inkompatibilitäten keine Fehleranalyse oder keine Änderung oder Erweiterung der Automatisierungslösung durchgeführt werden.

Für Servicepersonal, welches regional oder auch weltweit im Einsatz ist, bedeutet dies, dass ein solcher Einsatz entsprechend vorzubereiten ist. Diese Vorbereitung ist mit Aufwand und Kosten verbunden. Des Weiteren muss die Engineeringsoftware vom Hersteller entwickelt und verteilt werden. Die Software wird üblicherweise auf einem Installationsmedium (CD, DVD, etc.) geliefert. Seit einigen Jahren hat sich auch eine Lieferform durchgesetzt, bei welcher die Installationsdaten von einem sogenannten WebServer geladen werden können. Beiden Lieferwegen ist aber gemein, dass die Engineeringsoftware anschließend vom Endkunden installiert werden muss und dieser in diesem Vorgang vom Hersteller oder einer Serviceorganisationen durch Supportleistung unterstützt werden muss. Hierfür müssen eine Organisation und Ressourcen bereitgehalten werden, die nicht nur Investitionskosten sondern auch Fixkosten verursachen.

Wie eingangs bereits skizziert, ist es bisher üblich, dass Servicepersonal die für einen Serviceeinsatz oder eine Inbetriebnahme notwendige Software und Zusatzsoftware und den dazu gehörigen Projektierungsdatensatz auf einem als Programmiergerät fungierenden tragbaren Computer (Laptop) mit an den Ort des Automatisierungssystems bringt. Hierbei kann es sich um eine Vielzahl von Versionen der Inbetriebnahme- und Engineeringsoftware handeln, welche - abhängig einerseits vom Umfang des Automatisierungssystems und/oder der jeweiligen Automatisierungslösung und andererseits von einer Projekthistorie - vor Ort benötigt werden. Dies stellt für die Serviceorganisationen und deren Mitarbeiter einen nicht unerheblichen Aufwand bezüglich der Administration und Vorbereitung dar.

Um diesem Problem zu entgehen oder es zu entschärfen, setzen manche Service- und Inbetriebnahmeingenieure neuerdings virtuelle Maschinen ein, die auf der Festplatte des Programmiergeräts als sogenanntes Image vorgehalten werden. Eine oder mehrere derartige virtuelle Maschinen und dort ausführbare Engineeringsoftware sind damit mit dem Programmiergerät unmittelbar am Ort des jeweiligen Automatisierungssystems verfügbar. Die jeweilige virtuelle Maschine wird auf dem Programmiergerät gestartet und das Programmiergerät fungiert nur noch als Wirtsrechner und als Ausführungsumgebung für die jeweilige Engineeringsoftware.

Allerdings müssen auch solche Images von virtuellen Maschinen oder für virtuelle Maschinen gepflegt werden. Es müssen Sicherungskopien erstellt werden und es muss das richtige Image zur richtigen Zeit am Ort des jeweiligen Automatisierungssystems verfügbar gemacht werden. Auch dieses Vorgehen führt zu einem Verwaltungsaufwand und letztendlich zu Kosten. Zudem sind die anfallenden Mengen an Daten auch heutzutage immer noch, sehr abhängig von der Projekthistorie und vom Umfang der Automatisierungslösung, ein Problem. Oftmals und speziell dann, wenn unvorhergesehene Service- und Inbetriebnahmeeinsätze anstehen, fehlt die Zeit oder die Gelegenheit, die richtige Engineeringsoftware und die zugehörigen Daten mit zum Ort des jeweiligen Automatisierungssystems zu verbringen.

Ebenso liegen oftmals die Einsatzorte geographisch weit auseinander und bei einem Einsatz wird für eine Vorbereitung eines weiteren Serviceeinsatzes der Heimatstützpunkt nicht immer extra aufgesucht. Hier ist zwar hilfreich, dass durch moderne Breitbandkommunikationsverbindungen heutzutage vielfach eine Installationen im Sinne eines Updates oder Upgrades oder Neuinstallation von Software mit Unterstützung von Servicepersonal vom Heimatstützpunkt durch Fernzugriff durch das reisende Servicepersonal auch von unterwegs aus bewerkstelligt werden kann. Allerdings stellt dies mitunter einen erheblich zeitlichen und kostenmäßig relevanten Aufwand dar.

Weiterhin ist bei der bisherigen Art und Weise, wie ein hier relevanter Zugriff auf ein Automatisierungssystem erfolgt, mitunter ungünstig, dass es für das Servicepersonal einen nicht unerheblichen Aufwand bedeutet, zumindest am Ende des Einsatzes dem jeweiligen Kunden oder Betreiber des Automatisierungssystems die Projektierungsdaten auf Datenträgern zur Verfügung zu stellen. Der Betreiber des Automatisierungssystems ist auf diese Projektierungsdaten allerdings angewiesen um stets über aktuelle Daten zu verfügen und auch die Möglichkeit zu haben, die Serviceorganisation ggf. zu wechseln.

Hinzu kommt, dass die Produktion von Installationsmedien für die Hersteller der Engineeringsoftware auch beim heutigen Stand der Technik noch mehrere Wochen Zeit benötigt und sich somit die Verfügbarkeit der Engineeringsoftware zeitlich verzögert. Sind die Installationsmedien verfügbar oder ist die Engineeringsoftware (soweit technisch möglich) online verfügbar, so muss eine entsprechende Infrastruktur von dem Hersteller vorgehalten werden, um Kunden bei der Installation und Konfiguration der Engineeringsoftware zu unterstützen. Zusätzlich muss ein nicht unerheblicher Aufwand zur Einhaltung einer lizenzgemäßen Verwendung der Engineeringsoftware aufgewendet werden.

Aus der EP 1 906 274 A ist ein Verfahren zur web-basierten Konfiguration eines Automatisierungssystems bekannt. Der Zugriff auf das Automatisierungssystem erfolgt dabei über das Internet und zur Konfiguration des Automatisierungsgeräts können auf dem Webserver ablauffähige Applets aufgerufen werden. Dies erfordert aber auf Seiten des auf den Webserver zugreifenden Geräts, also zum Beispiel eines Programmiergeräts, eine lokale Verfügbarkeit der jeweils für die Konfiguration benötigten Daten oder es wird nur eine sehr eingeschränkte Konfigurierbarkeit ermöglicht. Die US 2011/0093847 A ist eine Veröffentlichung, die sich mit der Nutzung entfernter Ressourcen, also einer sogenannten Cloud, und dort konkret einer Konfigurierbarkeit von in der Cloud ausführbaren virtuellen Maschinen befasst. Die Nutzung der Ressourcen in einer Cloud oder im Internet wird auch in der EP 2 293 164 A, der US 2010/0256795 A und der EP 1 296 232 A behandelt.

Das Dokument US 6 788 980 B1 betrifft ein verteiltes Automatisierungssystem zur Vernetzung, Konfiguration und Betrieb von Feldgeräten , Steuergeräten, Bediengeräten u.ä., wobei eine entfernte Konfigurierung des Automatisierungssystems mittels eines entfernten Programmiergeräts ermöglicht wird. Das entfernte Programmiergerät hat Zugriff auf einen Server mit Engineeringsoftware (bezeichnet als Application Development Environment oder ADE) und kann Konfigurationsänderungen durchführen, die vom Engineeringsoftware in den Automatisierungsgeräten im IP Netzwerk des Automatisierungssystems implementiert werden, indem der ADE-Engineeringsoftware Java-Code erzeugt und in den Java-virtuellen Maschinen in den Automatisierungsgeräten geladen und ausgeführt wird.

Eine Aufgabe der Erfindung besteht entsprechend darin, ein Verfahren zum Zugriff auf ein Automatisierungssystem anzugeben, das die oben genannten Nachteile vermeidet oder zumindest deren Auswirkungen reduziert.
Diese Aufgabe wird erfindungsgemäß mit den Merkmalen des Anspruchs 1 gelöst. Dazu ist bei einem Verfahren zum Zugriff auf ein Automatisierungssystem, z.B. für Wartungs-, Diagnoseund Inbetriebnahmezwecke, etc., mit einem Programmiergerät Folgendes vorgesehen: Das Programmiergerät stellt eine indirekte Verbindung zu mindestens einem vom Automatisierungssystem umfassten Automatisierungsgerät her oder zwischen dem Programmiergerät und dem jeweiligen Automatisierungsgerät wird eine solche indirekte Verbindung hergestellt. Die indirekte Verbindung ergibt sich dabei über einen räumlich vom Automatisierungssystem und vom Standort des Programmiergerätes entfernten Konferenzserver. Der Konferenzserver hat Zugriff auf mindestens eine virtuelle Maschine mit Engineeringsoftware, also Zugriff auf Daten, die eine solche virtuelle Maschine repräsentieren. Der Konferenzserver erlaubt die entfernte Ausführung einer virtuellen Maschine durch das Programmiergerät und übermittelt einerseits zumindest Bildschirmausgaben und dergleichen der jeweiligen virtuellen Maschine an das Programmiergerät und andererseits in Abhängigkeit von Bedienhandlungen am Programmiergerät Engineeringdaten, also insbesondere Projektierungsdaten, an das mindestens eine Automatisierungsgerät.

Der Ort, an dem sich der Konferenzserver befindet, wird im Folgenden kurz, allerdings ohne Verzicht auf eine evtl. weitergehende Allgemeingültigkeit, als Rechenzentrum bezeichnet. Ein derartiges Rechenzentrum kann ein Server, eine sogenannte Serverfarm oder auch eine verteilte Serverfarm der jeweiligen Serviceorganisation oder eines Dienstleisters der Serviceorganisation sein. Demnach wird bei dem hier vorgestellten Ansatz der Installationsort der Engineering- und Inbetriebnahmesoftware in ein Rechenzentrum verlegt. Derer kann es global verteilt mehrere geben, welche gegenseitig ersetzend arbeiten können. Die Verbindung von einem oder mehreren verteilten und mit dem Internet verbundenen Rechenzentren wird im Folgenden auch als "cloud" bezeichnet. Dort können eine Vielzahl von Versionen einer Engineeringsoftware vorgehalten werden, so dass bei einem Serviceeinsatz am Ort eines Automatisierungssystems, immer die für das jeweilige Automatisierungssystem und dessen Komponenten notwendige Version der Engineeringsoftware online verfügbar gemacht werden kann.

Für jede Version der Engineeringsoftware wird ein Image vorgehalten, welches in einer virtuellen Maschine durch den Konferenzserver oder mittelbar durch das Programmiergerät gestartet werden kann. Der Konferenzserver wird ebenfalls in einem oder demselben Rechenzentrum vorgehalten. Er stellt die Verbindung zwischen der im Rechenzentrum laufenden Engineeringsoftware, dem Programmiergerät und dem Automatisierungssystem, also mindestens einem Automatisierungsgerät des Automatisierungssystems, her. Die Art des Verbindungsaufbaus gewährleistet hierbei, dass nur autorisierte Benutzer und Einheiten, also automatisierungssystemseitige Automatisierungsgeräte, miteinander verbunden werden können. Ebenso wird hierbei eine Multimandantenfähigkeit einer solchen Lösung vom Konferenzserver sichergestellt.

Die Verbindung zwischen den erwähnten Teilnehmern wird über die örtlich und situativ zugänglichen Kommunikationsverbindungen und Netze (LAN, WLAN, WAN, Mobilfunknetze, etc.) hergestellt. Auf dem Programmiergerät, also insbesondere einem Laptop oder sonstigem portablen Rechner des Service- und Inbetriebnahmeingenieurs, wie auch auf dem zumindest einen Automatisierungsgerät des Automatisierungssystems, mit dem die kommunikative Verbindung aufgebaut wird, ist eine Software installiert oder in sonst geeigneter Weise vorgehalten, welche den Zugang zum und vom Konferenzserver herstellt und erlaubt.

Der Konferenzserver erfüllt hierbei zumindest die beiden folgenden Aufgaben:

Zum Einen stellt der Konferenzserver eine virtuelle Verbindung zwischen dem Automatisierungssystem und der virtualisierten Engineeringsoftware her, welche im Rechenzentrum läuft oder durch den Konferenzserver gestartet wurde. Die Verbindung besteht zum Automatisierungssystem mit zumindest einen Automatisierungsgerät des Automatisierungssystems. Die Verbindung wird genutzt, um eine Kommunikation mit dem oder jedem jeweiligen Automatisierungsgerät zu ermöglichen. Typischerweise handelt es sich hierbei um eine Kommunikation, die zum Laden der durch die Engineeringsoftware erzeugten Projektierungsdaten in das Automatisierungssystem dient. Die Kommunikation, welche über ein Engineeringprotokoll erfolgt, kann aber auch zur Diagnose von Fehlern oder Fehlzuständen oder zur Überprüfung der ordnungsgemäßen Funktion des Automatisierungssystems und/oder dessen Einheiten dienen. Dabei kann die Kommunikation über gesicherte oder ungesicherte, also verschlüsselte oder unverschlüsselte Verbindungen erfolgen.

Zum Anderen stellt der Konferenzserver eine virtuelle Verbindung zwischen der Engineeringsoftware und dem Programmiergerät des Service- und Inbetriebnahmeingenieurs her. Diese dient zur Übertragung von Bilddaten und dergleichen zur Gewährleistung einer Bildschirmanzeige der Engineeringsoftware beim Programmiergerät. Umgekehrt dient die virtuelle Verbindung zwischen Programmiergerät und der im Rechenzentrum laufenden Engineeringsoftware auch zur Übertragung von Eingabedaten aller Art, um die Bedienung der entfernten Engineeringsoftware mit dem Programmiergerät zu ermöglichen. Auch diese Verbindung wird nur virtuell über den Konferenzserver hergestellt. Diese Verbindung dient also zum Übertragen von Dateien und/oder zum sogenannten Desktop Sharing. Dabei ist es aber unerheblich, ob tatsächlich einzelne Dateien vom Programmiergerät transferiert werden oder ob der Zugriff auf die

Projektierungsdaten des Programmiergeräts auf andere Art ermöglicht wird.

Um Projektierungsdaten, welche zum Service oder zur Inbetriebnahme eine Automatisierungssystems benötigt werden, für eine Inbetriebnahme vor Ort verfügbar zu machen, gibt es folgende Möglichkeiten: Zum Einen können die Projektierungsdaten über eine temporäre, vom Konferenzserver aufgebaute oder zur Verfügung stehende virtuelle Verbindung, vom Programmiergerät zur virtualisierten Engineeringsoftware in das Rechenzentrum geladen (File-Transfer) werden. Zum Anderen kann mittels einer vom Konferenzserver aufgebauten virtuellen Verbindung für die virtualisierte Engineeringsoftware ein Verzeichnis oder ein Laufwerk des Programmiergeräts zum Zugriff freigegeben werden. Dieses kann dann von der im Rechenzentrum laufenden Engineeringsoftware als quasi lokales Speichermedium für Projektierungsdaten verwendet werden. Schließlich können die zur Inbetriebnahme notwendigen Projektierungsdaten zum Konferenzserver hochgeladen und mit einer der vorangehend beschriebenen Methoden nach Anwahl des Automatisierungssystems automatisch der virtualisierten Engineeringsoftware zur Verfügung gestellt werden.

Ob der Konferenzserver im Internet oder einem sonstigen öffentlichen Netz zugänglich gemacht wird, oder ob der Konferenzserver im Netz einer Firma oder privaten Organisation installiert wird, ist dabei unerheblich (die Literatur grenzt die beiden Anwendungssituationen mit den Begrifflichkeiten "private cloud" und "public cloud" ab). Entscheidend ist die Kombination von Rechenzentrumsapplikation mit der Technik des Konferenzservers, wobei auch die Richtung des Verbindungsaufbaus (also einerseits von Automatisierungssystem zum Konferenzserver und andererseits vom Programmiergerät zum Konferenzserver) unerheblich ist. In Firmennetzen oder auch bei der Beteiligung von öffentlichen Netzen ist aber jeweils ein Aufbau der Verbindung einerseits vom Automatisierungssystem zum Konferenzserver sowie andererseits vom Programmiergerät zum Konferenzserver vorteilhaft.

Ebenfalls unerheblich ist, ob der Konferenzserver und die virtuelle Maschine mit der Engineeringsoftware im selben Rechenzentrum betrieben oder geographisch verteilt, ggf. weltweit verteilt, betrieben werden. Im letzteren Fall wird nach dem Start der jeweiligen virtuellen Maschine eine Verbindung zwischen der virtuellen Maschine und dem Konferenzserver aufgebaut wird, wobei die Richtung des Verbindungsaufbaus, also entweder ausgehend vom Konferenzserver oder ausgehend von der virtuellen Maschine, beliebig ist.

Als Programmiergerät kann ein portabler oder ein fest installierter Rechner oder dergleichen Verwendung finden. Entscheidend ist, dass das Programmiergerät die Ausführung von Software erlaubt, die der Service- und Inbetriebnahmeingenieur zur Erledigung seiner Aufgaben benötigt oder verwendet. Diese Software kann Teil des Betriebsystems des Programmiergerätes sein oder nachträglich in einen Speicher des Programmiergeräts geladen werden.

Einer der Vorteile der Erfindung besteht darin, dass durch den gemeinsam genutzten Zugriff auf die im Rechenzentrum abgelegten Projektierungsdaten der bisher erforderliche und eingangs skizzierte Aufwand entfällt.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Indem eine kommunikative Verbindung zwischen dem Programmiergerät und dem Konferenzserver einerseits und dem Konferenzserver und dem mindestens einen Automatisierungsgerät andererseits besteht, ergibt sich eine indirekte kommunikative Verbindung zwischen dem Programmiergerät und dem mindestens einen Automatisierungsgerät des zu wartenden, zu diagnostizierenden oder in Betrieb zu nehmenden Automatisierungssystem. Die kommunikative Verbindung zwischen Programmiergerät und Konferenzserver sowie Konferenzserver und Automatisierungsgerät muss nicht dauerhaft bestehen sondern es reicht aus, wenn diese besteht, wenn auch Datenverkehr stattfindet. Die Verbindungen werden aus diesem Grunde auch als virtuelle Verbindungen bezeichnet.

Indem eine weitere kommunikative Verbindung zwischen dem Konferenzserver und einem oder mehreren Geräten mit einer Datenbasis für jeweils zumindest eine virtuelle Maschine mit Engineeringsoftware besteht, kann der Konferenzserver als Mittler einerseits zwischen dem Programmiergerät und der Engineeringsoftware und andererseits zwischen dem Automatisierungsgerät im Automatisierungssystem und der Engineeringsoftware fungieren. Für den Bediener des Programmiergeräts ergibt sich damit die Möglichkeit der Ausführung der entfernten Engineeringsoftware durch am Programmiergerät vorgenommene Bedienhandlungen, wobei Ausgaben der Engineeringsoftware zur Kontrolle durch den Bediener an das Programmiergerät übermittelt werden. Projektierungs- oder sonstige Engineeringdaten können direkt von der Engineeringsoftware mittels der über den Konferenzserver bestehenden Verbindung zum Automatisierungssystem und dort an das zumindest eine Automatisierungsgerät übermittelt werden. Wenn der Speicherort solcher Projektierungs- oder Engineeringdaten während des Zugriffs auf das Automatisierungssystem ein Ort auf dem Programmiergerät ist, erfolgt die Übertragung der diesbezüglichen Daten vom Programmiergerät zum Automatisierungssystem über die über den Konferenzserver bestehende, mittelbare kommunikative Verbindung von Programmiergerät und Automatisierungssystem.

Wenn die Engineeringsoftware mittels einer Mehrzahl virtueller Maschinen redundant zur Verfügung gestellt wird, ist ein gleichzeitiger Zugriff auf jeweils eine virtuelle Maschine mit einer jeweiligen Engineeringsoftware durch mehrere Service- und Inbetriebnahmeingenieure möglich.

Wenn die Mehrzahl redundanter virtueller Maschinen örtlich verteilt zur Verfügung gestellt wird, ergibt sich hinsichtlich der Datenhaltung der virtuellen Maschinen zusätzliche Sicherheit. Selbst ein Schaden in einem Rechenzentrum und ein dadurch evtl. bedingter Verlust einer oder mehrerer virtueller Maschinen erlaubt die fortbestehende Verfügbarkeit der von der Serviceorganisation angebotenen Dienstleistungen. Zudem kann bei einer örtlich verteilten Verfügbarkeit solcher virtueller Maschinen mit Engineeringsoftware das Servicepersonal das örtlich jeweils am günstigsten gelegene Rechenzentrum mit der oder den dortigen virtuellen Maschinen auswählen, so dass sich evtl. ein verbesserter Datendurchsatz ergibt und damit schnelleres Arbeiten möglich ist.

Wenn die örtlich verteilte Verfügbarkeit redundanter virtueller Maschinen jeweils mit Engineeringsoftware automatisch gewährleistet wird, ergibt sich ausreichend belastbare Datensicherung. Selbst wenn ein Rechenzentrum ausfällt, können dessen Daten durch spätere Übertragung der virtuellen Maschinen von anderen Rechenzentren jederzeit vollständig wieder hergestellt werden.

Die o.g. Aufgabe wird auch mit einem nach dem Verfahren wie hier und im Folgenden beschrieben arbeitenden System gelöst, das dazu Mittel zur Durchführung des Verfahrens umfasst. Die Erfindung ist dabei bevorzugt in Software implementiert. Die Erfindung ist damit einerseits auch ein Computerprogramm mit durch einen Computer ausführbaren Programmcodeanweisungen und andererseits ein Speichermedium mit einem derartigen Computerprogramm sowie schließlich auch eine Verarbeitungseinheit mit einem Mikroprozessor oder dergleichen, in dessen Speicher als Mittel zur Durchführung des Verfahrens und seiner Ausgesstaltungen ein solches Computerprogramm geladen oder ladbar ist.

Das System umfasst insoweit das Programmiergerät, das mindestens eine Automatisierungsgerät des jeweiligen Automatisierungssystems, einen entfernten Konferenzserver und zumindest eine virtuelle Maschine mit Engineeringsoftware. In dem System besteht zwischen dem Programmiergerät und dem Konferenzserver einerseits und dem mindestens einen Automatisierungsgerät und dem Konferenzserver andererseits zumindest eine virtuelle Verbindung und damit eine indirekte Verbindung zwischen dem Programmiergerät und dem mindestens einen Automatisierungsgerät. Weiterhin besteht in dem System zwischen dem Konferenzserver und der virtuellen Maschine mit der Engineeringsoftware zumindest eine virtuelle Verbindung und damit indirekt eine Verbindung einerseits zwischen dem Programmiergerät und der virtuellen Maschine und andererseits zwischen dem mindestens einen Automatisierungsgerät und der virtuellen Maschine. In dem System erlaubt die indirekte Verbindung zwischen dem Programmiergerät und der virtuellen Maschine die entfernte Ausführung einer virtuellen Maschine durch das Programmiergerät sowie zumindest die Übermittlung von Bildschirmausgaben der jeweiligen virtuellen Maschine an das Programmiergerät. Damit sind schließlich in dem System über den Konferenzserver in Abhängigkeit von Bedienhandlungen am Programmiergerät Engineering- und/oder sonstige Projektierungsdaten von der virtuellen Maschine an das mindestens eine Automatisierungsgerät übermittelbar. Diese Übermittlung von Engineering- oder Projektierungsdaten stellt eine Form des Zugriffs auf das Automatisierungssystem dar. Üblicherweise erfolgt ein solcher Zugriff zumindest zum Abschluss des jeweiligen Serviceeinsatzes um während des Einsatzes vorgenommene Änderungen oder Anpassungen dem Automatisierungssystem einzuprägen. Während des Serviceeinsatzes kann der Zugriff auf das Automatisierungssystem über das gleiche System und auf Basis des gleichen Verfahrens auch erfolgen, indem Daten, also z.B. Betriebsdaten des Automatisierungssystems oder Zustandsdaten aus dem jeweiligen technischen Prozess, usw., abgerufen werden, durch die Engineeringsoftware aufbereitet werden und am Programmiergerät zur Darstellung oder zur Modifikation verfügbar gemacht werden.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Prüf- und Arbeitsverfahren betreffen.

Es zeigen
- FIG 1: ein Automatisierungssystem mit mindestens einem Automatisierungsgerät auf das mit einem Programmiergerät zu Wartungs- oder ähnlichen Zwecken ein Zugriff erfolgen soll, nicht direkt sondern indirekt über einen Konferenzserver erfolgt und
- FIG 2: eine separate Darstellung einzelner Verbindungen bei dem Zugriff auf das Automatisierungssystem gemäß FIG 1.

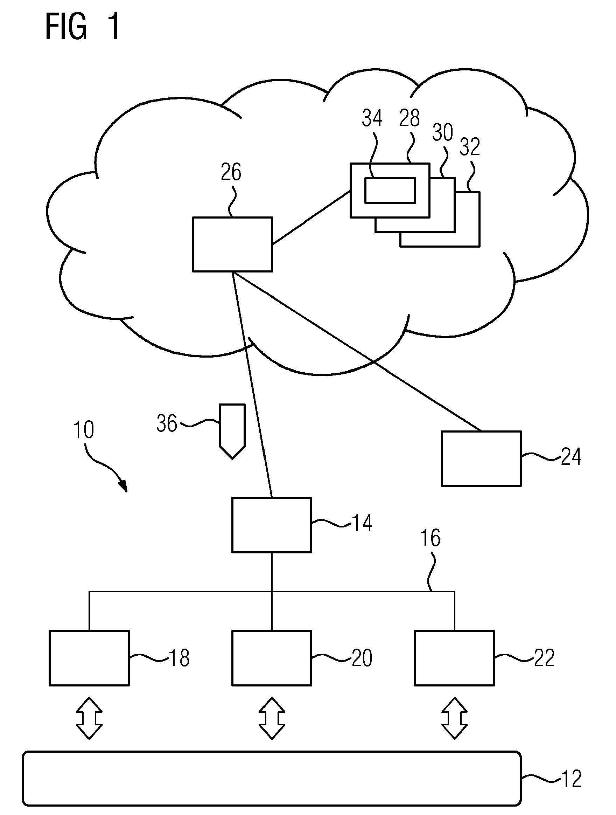

FIG 1 zeigt schematisch vereinfacht ein Automatisierungssystem 10, das in an sich bekannter Art und Weise zur Steuerung und/oder Überwachung eines nicht näher dargestellten technischen Prozesses 12 vorgesehen ist. Das Automatisierungssystem 10 umfasst zumindest ein Automatisierungsgerät 14. Dann sind die Begriffe Automatisierungssystem 10 und Automatisierungsgerät 14 synonym. In der dargestellten Situation umfasst das Automatisierungssystem 10 eine Mehrzahl von zum Beispiel über einen Bus 16 kommunikativ verbundenen Automatisierungsgeräten 14, 18, 20, 22. Zur Steuerung und/oder Überwachung des jeweiligen technischen Prozesses 12 führt das Automatisierungssystem 10, nämlich das oder jedes davon umfasste Automatisierungsgerät 14, 18-22, in an sich bekannter Art ein oder mehrere Steuerungsprogramme (nicht dargestellt) aus. Die Gesamtheit der Steuerungsprogramme und eine Konfiguration und/oder Parametrierung der einzelnen Automatisierungsgeräte 14, 18-22, zum Beispiel Antriebe oder dergleichen, wird im Folgenden als Automatisierungslösung bezeichnet.

Mit einem Programmiergerät 24 soll durch Servicepersonal oder Personal des Betreibers des Automatisierungssystems 10 zum Beispiel für Wartungs-, Diagnose- und Inbetriebnahmezwecke, etc. ein Zugriff auf das Automatisierungssystem 10 erfolgen. Bisher ist dafür ausgehend vom Programmiergerät 24 eine direkte kommunikative Verbindung zu zumindest einem Automatisierungsgerät 14, 18-22 des Automatisierungssystems 10 hergestellt worden. Dies erfordert aber auch die Verfügbarkeit einer zum Automatisierungssystem 10 und zur dort ausgeführten Automatisierungslösung passenden Engineeringsoftware auf dem Programmiergerät 24. Um die damit einhergehenden Probleme zu vermeiden, ist vorgesehen, dass nur eine indirekte Verbindung zum Automatisierungssystem 10 hergestellt wird.

Diese indirekte Verbindung erfolgt über einen Konferenzserver 26. Damit besteht zum Zugriff auf das Automatisierungssystem 10 mit dem Programmiergerät 24 zwischen dem Programmiergerät 24 und mindestens einem vom Automatisierungssystem 10 umfassten Automatisierungsgerät 14 eine indirekte Verbindung und zwar über den räumlich vom Automatisierungssystem 10 und vom Standort des Programmiergerätes 24 entfernten Konferenzserver 26. Der Konferenzserver 26 hat Zugriff auf mindestens eine virtuelle Maschine 28, 30, 32 mit Engineeringsoftware 34. Als Ort für den Konferenzserver 26 und die mindestens eine virtuelle Maschine 28, 30, 32 kommt ein Rechenzentrum, zum Beispiel ein Rechenzentrum einer Serviceorganisation in Betracht. Der Ort des Konferenzservers 26 und der mindestens einen virtuellen Maschine 28, 30, 32 wird auch als "cloud" bezeichnet und ist in der Darstellung in FIG 1 entsprechend als Wolke eingezeichnet. Der physikalische Ort eines Rechners, auf dem der Konferenzservers 26 als Softwareapplikation ausgeführt wird und eines oder mehrerer Rechner, auf dem eine oder mehrere virtuelle Maschinen 28-32 ausführbar sind, kann dabei durchaus auseinanderfallen und die "cloud" ist gleichsam ein virtueller Ort. Eine einfache "cloud" umfasst nur einen Rechner, der den Konferenzservers 26 und die oder jede virtuelle Maschine 28-32 ausführt.

Der Konferenzserver 26 erlaubt die entfernte Ausführung der virtuellen Maschine 28 und der dort vorgehaltenen Engineeringsoftware 34 durch das Programmiergerät 24. Der Konferenzserver 26 übermittelt zumindest Bildschirmausgaben der jeweiligen virtuellen Maschine 28-32 bzw. der jeweiligen Engineeringsoftware 34 an das Programmiergerät 24 und am Programmiergerät 24 vorgenommene Bedienhandlungen an die virtuelle Maschine 28-32 und deren Engineeringsoftware 34. Des Weiteren werden mittels des Konferenzservers 26 und in Abhängigkeit von Bedienhandlungen am Programmiergerät 24 Engineering- oder Projektierungsdaten 36 an das mindestens eine Automatisierungsgerät 14 übermittelt. Die Engineering- oder Projektierungsdaten 36 ergeben sich dabei im Rahmen der entfernten Bedienung der Engineeringsoftware 34 mit dem Programmiergerät 24 und aufgrund der mit der Engineeringsoftware 34 möglichen Änderung, Anpassung oder Modifikation der vom Automatisierungssystem 10 ausgeführten Automatisierungslösung.

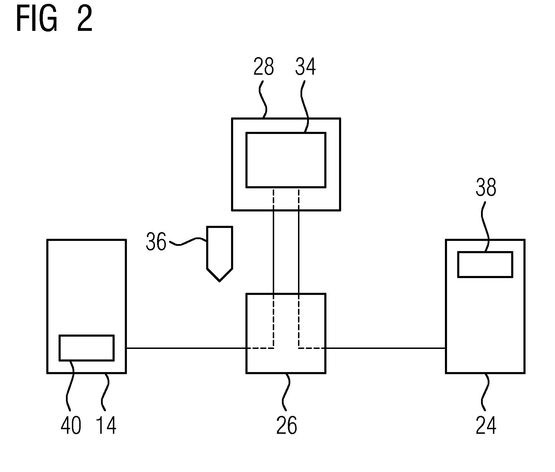

FIG 2 zeigt nochmals weiter schematisch vereinfacht einzelne Aspekte der Situation gemäß FIG 1 zur Verdeutlichung der zum Zugriff auf das Automatisierungssystem 10 (FIG 1) und dort auf zumindest ein Automatisierungsgerät 14 bestehenden Verbindungen. Die vom Programmiergerät 24 über den Konferenzserver 26 zur virtuellen Maschine 28 und dessen Engineeringsoftware 34 bestehenden Verbindungen sind zum Beispiel sogenannte VNC-Verbindungen (VNC = Virtual Network Computing) und erlauben damit das Ausführen der Engineeringsoftware 34 auf der entfernten virtuellen Maschine 28 durch das Programmiergerät 24. Die zwischen der virtuellen Maschine 28 und dessen Engineeringsoftware 34 und dem Automatisierungsgerät 14 bestehenden Verbindungen sind zum Beispiel Verbindungen die die Verwendung eines Engineeringprotokolls, zum Beispiel das sogenannte S7-Protokoll der Anmelderin, und Übertragungen von Dateien (File Transfer) erlauben. Des weiteren ist ersichtlich, dass die Verbindung vom Programmiergerät 24 zu dem mindestens einem Automatisierungsgerät 14 im Automatisierungssystem 10 nur mittelbar besteht und zwar über den Konferenzserver 26, indem dieser Verbindungen zu der virtuellen Maschine 28 und dessen Engineeringsoftware 34 bereitstellt.

Die Engineeringsoftware 34 wird in allen verfügbaren oder zumindest in einigen wesentlichen Versionen vorkonfiguriert und je nach Anforderung in einer virtuellen Maschine 28-32 durch den Konferenzserver 26 bereitgestellt und dann situativ instanziiert. Dadurch besteht die Möglichkeit für das Servicepersonal mit Hilfe einer auf dem Programmiergerät installierten Clientsoftware 38 über den Konferenzserver eine Verbindung zu der im Rechenzentrum instanziierten virtuellen Maschine 28-32 aufzubauen. Die virtuelle Maschine 28-32 kann dadurch ferngesteuert und benutzt werden. Des Weiteren wird durch den Konferenzserver 26 eine Verbindung zur Übertragung von Dateien (File Transfer) zu der virtuellen Maschine 28-32 aufgebaut und die für das Automatisierungssystem 10 benötigten Projektierungsdaten (Projektierungsdatei 40) zur Verfügung gestellt. Sobald die Projektierungsdatei 40 durch die auf der jeweiligen virtuellen Maschine 28-32 ablaufende Engineeringsoftware 34 geladen ist, kann wiederum über den Konferenzserver 26 eine virtuelle Verbindung zwischen der jeweiligen virtuellen Maschine 28-32 und dem mindestens einen Automatisierungsgerät 14 des Automatisierungssystems 10 aufgebaut werden. Dadurch können die Projektierungsdaten, zum Beispiel spätestens nach Abschluss des Serviceeinsatzes, von jeweiligen virtuellen Maschine 28-32 mit Hilfe der Engineeringsoftware 34, welche über ein Engineeringprotokoll mit dem Konferenzserver 26 kommuniziert, zu diesem geladen werden. Über den Konferenzserver 26 als Schaltstelle können die Projektierungsdaten zum Automatisierungssystem 10 übertragen werden. Dazu wird auch zwischen dem Konferenzserver 26 und dem mindestens einen Automatisierungsgerät 14 des Automatisierungssystems eine für eine Verwendung des Engineeringprotokolls geeignete Verbindung aufgebaut. Diese Verbindung ist als virtuelle, also nicht notwendig dauerhaft bestehende Verbindung ausreichend.

Nach dem gleichen Prinzip ist auch eine Diagnose des Automatisierungssystems 10 oder einzelner davon umfasster Automatisierungsgeräte 14, 18-22 möglich. Der Konferenzserver 26 kann alle Projektierungsdaten einer Serviceorganisation vorhalten, so dass diese jederzeit und für jeden berechtigten Mitarbeitet verfügbar sind.

Einzelne im Vordergrund stehende Aspekte der hier eingereichten Beschreibung lassen sich damit kurz wie folgt zusammenfassen: Es wird ein Verfahren zum Zugriff auf ein Automatisierungssystem 10 angegeben, das auf einer Kombination von vorhandener Internet- und Netzwerktechnologie, sowie Netzzugangstechnologie, Rechenzentrumsapplikation und einem in einem Netz, zum Beispiel dem Internet, verfügbaren Konferenzserver 26 basiert. Zum Zugriff auf den Konferenzserver 26 wird auf einem Programmiergerät 24 eine Clientsoftware 38 gestartet. Eine ähnliche Softwarefunktionalität läuft auf dem mindestens einen Automatisierungsgerät 14 des Automatisierungssystems 10 ab, über das der Zugriff auf das Automatisierungssystem 10 erfolgt. Zwischen den einzelnen Einheiten des Systems (Teilsysteme), nämlich Programmiergerät 24, Konferenzserver 26 und Automatisierungsgerät 14 sowie dem Konferenzserver 26 und zumindest einer virtuellen Maschine 28-32, werden virtuelle, also nicht notwendig dauerhaft bestehende Kommunikationsverbindungen aufgebaut. Jede Kommunikationsverbindung zwischen je zwei Teilsystemen muss nur bestehen, wenn auch Datenverkehr über die jeweilige Verbindung erfolgt. Durch die beschriebene Kombination der Teilsysteme und die Art der Verbindung der Teilsysteme entsteht ein Gesamtsystem mit Fähigkeiten und Vorteilen, das vorher noch nicht existent war.

Die Vorteile sind insbesondere geringere Organisations-, Vorbereitungs- und Fixkosten für Nutzer und Hersteller der Engineeringsoftware 34. Der Hersteller der Engineeringsoftware hat geringere Kosten, da der bisher notwendige Aufwand und die damit einhergehenden Kosten zur Produktion der Installationsmedien eingespart werden kann. Des Weiteren braucht keine Unterstützung für die Installation der Engineeringsoftware gegeben werden, da diese Installation einmalig in einem zentralen Rechenzentrum erfolgt und dann für eine Instanziierung auf virtuellen Maschinen 28-32 zur Verfügung steht. Auf einem vom Servicepersonal verwendeten Programmiergerät 24 ist nur eine Clientsoftware 38 erforderlich, die den Zugang zu dem oder einem Konferenzserver 26 ermöglicht. Die Clientsoftware 38 ist von der jeweiligen Engineeringsoftware 34 unabhängig und gestattet damit die entfernte Benutzung auch zukünftiger Versionen der Engineeringsoftware 34. Die korrespondierende Clientsoftware auf Seiten des Automatisierungssystems 10 kann bei Lieferung des Automatisierungssystems 10 installiert oder verfügbar gemacht werden.

Für den Betreiber des Automatisierungssystems 10 und für Serviceorganisationen sowie dort jeweils tätiges Servicepersonal ergibt sich ebenfalls eine Vielzahl von Vorteilen. Zum Einen entfällt der Aufwand bei der bisher mitunter notwendigen Installation einer Engineeringsoftware 34, da diese dauerhaft online verfügbar ist und das Servicepersonal mit einem entsprechend ausgestatteten (Clientsoftware 38) Programmiergerät 24 spontan darauf Zugriff nehmen kann. Dadurch spart der Anwender Zeit, Aufwand und somit letztendlich Kosten. Zum Anderen wird die Reaktionszeit bei Serviceeinsätzen verringert. Das Servicepersonal kann schneller reagieren und hat letztendlich einen höheren Durchsatz. Die Engineeringsoftware 34 ist vom jeweiligen Aufenthaltsort des Servicepersonals unabhängig und spontan und weltweit verfügbar. Einzige Voraussetzung ist das Vorhandensein entsprechender Zugangsnetze.

Insgesamt kann die auf dem hier beschriebenen Verfahren basierende Lösung zum Zugriff auf ein Automatisierungssystem auch als Dienstleistung bezogen werden ("public cloud") oder über eine Lizenzierung verfügbar gemacht werden ("private cloud"). Im Falle der Verwendung als Dienstleistung ist eine geringe Investitionsschwelle gegeben, welche aber trotzdem die Möglichkeit zur Skalierung offen hält. Wenn gewünscht, kann für Abnehmer einer solchen Dienstleistung eine gesicherte Verwahrung von Daten, also insbesondere Engineering- und Projektierungsdaten, und automatische Zuordnung sowie Bereitstellung der jeweiligen Daten erfolgen. Alle Daten sind für die Serviceorganisation und für den Betreiber des jeweiligen Automatisierungssystems 10 gleichermaßen verfügbar. Es entsteht für die Serviceorganisation und für den Betreiber praktisch kein Aufwand für Sicherung und Handhabung, Archivierung der Kopien der Projektdateien. Die Gewährleistung der Verfügbarkeit solcher Daten über den kompletten Lebenszyklus des jeweiligen Automatisierungssystems 10 ist im Vergleich zu der vorherigen Situation mit vernachlässigbar geringem Aufwand verbunden. Schließlich kann eine Migration eines Bestandes alter Projektierungsdaten leicht und fast Aufwandsneutral durchgeführt werden, nämlich durch Hochladen der Projektierungsdaten in die "cloud"

## Patentansprüche

1. Verfahren zum Zugriff auf ein Automatisierungssystem (10) mittels eines Programmiergeräts (24),
wobei zwischen dem Programmiergerät (24) und mindestens einem vom Automatisierungssystem (10) umfassten Automatisierungsgerät (14) eine indirekte Verbindung hergestellt wird,
dass die indirekte Verbindung zwischen dem Programmiergerät (24) und einem Automatisierungsgerät (14) über einen räumlich vom Automatisierungssystem (10) und vom Standort des Programmiergerätes (24) entfernten Konferenzserver (26) hergestellt wird,
**dadurch gekennzeichnet,**
**dass** der Konferenzserver (26) Zugriff auf eine Mehrzahl virtueller Maschinen (28-32) mit Engineeringsoftware (34) hat, dass der Konferenzserver (26) eine entfernte Ausführung einer virtuellen Maschine (28-32) und deren Engineeringsoftware (34) durch das Programmiergerät (24) erlaubt,
**dass** der Konferenzserver (26) zumindest Bildschirmausgaben der jeweiligen virtuellen Maschine (28-32) an das Programmiergerät (24) übermittelt und
**dass** der Konferenzserver (26) in Abhängigkeit von Bedienhandlungen am Programmiergerät (24) Engineeringdaten (36) von der virtuellen Maschine (28-32) an das mindestens eine Automatisierungsgerät (14) übermittelt.

2. Verfahren nach Anspruch 1, wobei eine kommunikative Verbindung zwischen dem Programmiergerät (24) und dem Konferenzserver (26) einerseits und dem Konferenzserver (26) und dem mindestens einen Automatisierungsgerät (14) andererseits besteht.

3. Verfahren nach Anspruch 2, wobei eine weitere kommunikative Verbindung zwischen dem Konferenzserver (26) und einem oder mehreren Geräten mit einer Datenbasis für jeweils zumindest eine virtuelle Maschine (28-32) besteht.

4. Verfahren nach einem der vorangehenden Ansprüche, wobei die Engineeringsoftware (34) mittels einer Mehrzahl virtueller Maschinen (28-32) redundant zur Verfügung gestellt wird.

5. Verfahren nach Anspruch 4, wobei die Mehrzahl redundanter virtueller Maschinen (28-32) örtlich verteilt zur Verfügung gestellt wird.

6. Verfahren nach Anspruch 4 oder 5, wobei die örtlich verteilte Verfügbarkeit redundanter virtueller Maschinen (28-32) jeweils mit Engineeringsoftware automatisch gewährleistet wird.

7. System umfassend ein Programmiergerät (24), mindestens ein Automatisierungsgerät (14) eines Automatisierungssystems (10), einen räumlich vom Automatisierungssystem (10) und vom Standort des Programmiergeräts (24) entfernten Konferenzserver (26),
wobei zwischen dem Programmiergerät (24) und dem Konferenzserver (26) einerseits und dem mindestens einen Automatisierungsgerät (14) und dem Konferenzserver (26) andererseits eine virtuelle Verbindung und damit eine indirekte Verbindung zwischen dem Programmiergerät (24) und dem mindestens einen Automatisierungsgerät (14) besteht,
wobei über den Konferenzserver (26) in Abhängigkeit von Bedienhandlungen am Programmiergerät (24) Engineeringdaten (36) von der virtuellen Maschine (28-32) an das mindestens eine Automatisierungsgerät (14) übermittelbar sind,
**dadurch gekennzeichnet,**
**dass** das System eine Mehrzahl virtueller Maschinen (28-32) mit Engineeringsoftware (34) umfasst,
wobei zwischen dem Konferenzserver (26) und einer der virtuellen Maschinen (28-32) mit Engineeringsoftware (34) eine virtuelle Verbindung und damit indirekt eine Verbindung einerseits zwischen dem Programmiergerät (24) und der virtuellen Maschine (28-32) und andererseits zwischen dem mindestens einen Automatisierungsgerät (14) und der virtuellen Maschine (28-32) besteht und
wobei die indirekte Verbindung zwischen dem Programmiergerät (24) und der virtuellen Maschine (28-32) die entfernte Ausführung der virtuellen Maschine (28-32) und deren Engineeringsoftware (34) durch das Programmiergerät (24) sowie zumindest die Übermittlung von Bildschirmausgaben der jeweiligen virtuellen Maschine (28-32) an das Programmiergerät (24) erlaubt.

8. Computerprogramm mit Programmcode-Mitteln, um alle Schritte von jedem beliebigen der Ansprüche 1 bis 6 durchzuführen, wenn das Programm auf einem Programmiergerät (24), Konferenzserver (26) und/oder Automatisierungsgerät (14) ausgeführt wird.

9. Computerprogrammprodukt mit Programmcode-Mitteln, die auf einem computerlesbaren Datenträger gespeichert sind, um das Verfahren nach jedem beliebigen der Ansprüche 1 bis 6 durchzuführen, wenn das Programm auf einem Programmiergerät (24), Konferenzserver (26) und/oder Automatisierungsgerät (14) ausgeführt wird.

10. Digitales Speichermedium mit elektronisch auslesbaren Steuersignalen, die so mit einer Verarbeitungseinheit des Programmiergeräts (24), des Konferenzservers (26) und/oder Automatisierungsgeräts (14) zusammenwirken können, dass ein Verfahren nach einem der Ansprüche 1 bis 6 ausgeführt wird.

## Claims

1. Method for accessing an automation system (10) by means of a programming device (24),
wherein an indirect connection is established between the programming device (24) and at least one automation device (14) encompassed by the automation system (10),
such that the indirect connection between the programming device (24) and an automation device (14) is established by way of a conference server (26) which is spatially remote from the automation system (10) and from the location of the programming device (24),
**characterised in that**
the conference server (26) has access to a plurality of virtual machines (28-32) having engineering software (34),
the conference server (26) permits a remote execution of a virtual machine (28-32) and the engineering software (34) thereof by means of the programming device (24),
the conference server (26) transmits at least screen dumps of the respective virtual machine (28-32) to the programming device (24) and
the conference server (26) transmits engineering data (36) from the virtual machine (28-32) to the at least one automation device (14) as a function of operator control actions at the programming device (24).

2. Method according to claim 1, wherein a communicative connection exists between the programming device (24) and the conference server (26) on the one hand and between the conference server (26) and the at least one automation device (14) on the other hand.

3. Method according to claim 2, wherein a further communicative connection exists between the conference server (26) and one or more devices having a database for at least one virtual machine (28-32) in each case.

4. Method according to one of the preceding claims, wherein the engineering software (34) is made available redundantly by means of a plurality of virtual machines (28-32).

5. Method according to claim 4, wherein the plurality of redundant virtual machines (28-32) are made available in a geographically distributed manner.

6. Method according to claim 4 or 5, wherein the geographically distributed availability of redundant virtual machines (28-32) is ensured automatically by means of engineering software in each case.

7. System comprising a programming device (24), at least one automation device (14) of an automation system (10), a conference server (26) which is spatially remote from the automation system (10) and from the location of the programming device (24),
wherein between the programming device (24) and the conference server (26) on the one hand and between the at least one automation device (14) and the conference server (26) on the other hand there exists a virtual connection and consequently an indirect connection between the programming device (24) and the at least one automation device (14),
wherein engineering data (36) can be transmitted from the virtual machine (28-32) to the at least one automation device (14) by way of the conference server (26) as a function of operator control actions at the programming device (24), **characterised in that**
the system comprises a plurality of virtual machines (28-32) with engineering software (34),
wherein between the conference server (26) and one of the virtual machines (28-32) having engineering software (34) there exists a virtual connection and consequently indirectly a connection between the programming device (24) and the virtual machine (28-32) on the one hand and between the at least one automation device (14) and the virtual machine (28-32) on the other hand, and
wherein the indirect connection between the programming device (24) and the virtual machine (28-32) permits the remote execution of the virtual machine (28-32) and the engineering software (34) thereof by means of the programming device (24) as well as at least the transmission of screen dumps of the respective virtual machine (28-32) to the programming device (24).

8. Computer program comprising program code means for performing all the steps of any one of claims 1 to 6 when the program is executed on a programming device (24), conference server (26) and/or automation device (14).

9. Computer program product comprising program code means which are stored on a computer-readable data medium for the purpose of performing the method according to any one of claims 1 to 6 when the program is executed on a programming device (24), conference server (26) and/or automation device (14).

10. Digital storage medium having electronically readable control signals which can interact with a processing unit of the programming device (24), the conference server (26) and/or the automation device (14) in such a way that a method according to one of claims 1 to 6 is executed.

## Revendications

1. Procédé d'accès à un système (10) d'automatisation au moyen d'un appareil (24) de programmation,
dans lequel on ménage une liaison indirecte entre l'appareil (24) de programmation et au moins un appareil (14) d'automatisation englobé par le système (10) d'automatisation,
en ce que l'on ménage la liaison indirecte entre l'appareil (24) de programmation et un appareil (14) d'automatisation par un serveur (26) de conférence éloigné dans l'espace du système (10) d'automatisation et du site d'implantation de l'appareil (24) de programmation,
**caractérisé**
**en ce que** le serveur (26) de conférence a accès par des logiciels (34) d'ingénierie à une pluralité de machines (28 à 32) virtuelles,
**en ce que** le serveur (26) de conférence permet une réalisation à distance d'une machine (28 à 32) virtuelle et de son logiciel (34) d'ingénierie par l'appareil (24) de programmation,
**en ce que** le serveur (26) de conférence transmet au moins des sorties d'écran des machines (28 à 32) virtuelles à l'appareil (24) de programmation, et
**en ce que** le serveur (26) de conférence transmet, en fonction de manipulations de service sur l'appareil (24) de programmation, des données (36) d'ingénierie de la machine (28 à 32) virtuelle au au moins un appareil (14) d'automatisation.

2. Procédé suivant la revendication 1, dans lequel il existe une liaison de communication entre l'appareil (24) de programmation et le serveur (26) de conférence, d'une part, et entre le serveur (26) de conférence et le au moins un appareil (14) d'automatisation, d'autre part.

3. Procédé suivant la revendication 2, dans lequel il existe une autre liaison de communication entre le serveur (26) de conférence et un ou plusieurs appareils ayant une base de données pour respectivement au moins une machine (28 à 32) virtuelle.

4. Procédé suivant l'une des revendications précédentes, dans lequel on met le logiciel (34) d'ingénierie à disposition de manière redondante au moyen d'une pluralité de machines (28 à 32) virtuelles.

5. Procédé suivant la revendication 4, dans lequel on met à disposition de manière répartie dans l'espace la pluralité de machines (28 à 32) virtuelles redondantes.

6. Procédé suivant la revendication 4 ou 5, dans lequel on garantit automatiquement la disponibilité répartie localement de machines (28 à 32) virtuelles redondantes respectivement par un logiciel d'ingénierie.

7. Système comprenant un appareil (24) de programmation, au moins un appareil (14) d'automatisation d'un système (10) d'automatisation, un serveur (26) de conférence éloigné dans l'espace du système (10) d'automatisation et du site d'implantation de l'appareil (24) de programmation,
dans lequel il existe entre l'appareil (24) de programmation et le serveur (26) de conférence d'une part, et entre le au moins un appareil (14) d'automatisation et le serveur (26) de conférence, d'autre part, une liaison virtuelle et ainsi une liaison indirecte entre l'appareil (24) de programmation et le au moins un appareil (14) d'automatisation,
dans lequel il peut être transmis par le serveur (26) de conférence, en fonction de manipulations de service sur l'appareil (24) de programmation, des données (36) d'ingénierie de la machine (28 à 32) virtuelle au au moins un appareil (14) d'automatisation,
**caractérisé**
**en ce que** le système comprend une pluralité de machines (28 à 32) virtuelles ayant un logiciel (34) d'ingénierie, dans lequel il existe entre le serveur (26) de conférence et l'une des machines (28 à 32) virtuelles ayant un logiciel (34) d'ingénierie une liaison virtuelle et ainsi indirectement une liaison, d'une part, entre l'appareil (24) de programmation et la machine (28 à 32) virtuelle et, d'autre part, entre le au moins un appareil (14) d'automatisation et la machine (28 à 32) virtuelle et dans lequel la liaison indirecte entre l'appareil (24) de programmation et la machine (28 à 32) virtuelle permet la réalisation à distance de la machine (28 à 32) virtuelle et de son logiciel (34) d'ingénierie par l'appareil (24) de programmation ainsi qu'au moins la transmission de données d'écran de la machine (28 à 32) virtuelle à l'appareil (24) de programmation.

8. Programme d'ordinateur ayant des moyens de code de programme pour effectuer tous les stades de l'une quelconque des revendications 1 à 6 lorsque le programme se déroule sur un appareil (24) de programmation, un serveur (26) de conférence et/ou un appareil (14) d'automatisation.

9. Produit de programmes d'ordinateur ayant des moyens de code de programme, qui sont mémorisés sur un support de données déchiffrables par ordinateur pour effectuer le procédé suivant l'une quelconque des revendications 1 à 6, lorsque le programme se déroule sur un appareil (24) de programmation, un serveur (26) de conférence et l'appareil (14) d'automatisation.

10. Support de mémoire numérique ayant des signaux de commande pouvant être déchiffrés électroniquement, qui peuvent coopérer avec une unité de traitement de l'appareil (24) de programmation, du serveur (26) de conférence et/ou d'appareil (14) d'automatisation, de manière à exécuter un procédé suivant l'une des revendications 1 à 6.
